# EUROPÄISCHE PATENTSCHRIFT

(11) **EP 1 328 853 B1**
(45) Veröffentlichungstag und Bekanntmachung des Hinweises auf die Patenterteilung: **15.11.2006**
(21) Anmeldenummer: 01978362.0
(22) Anmeldetag: 13.09.2001
(51) Int. Cl.: G05B 19/042

(54) **VERFAHREN, EINRICHTUNG UND SYSTEM ZUM ERFASSEN, VISUALISIEREN UND/ODER ZUM VERÄNDERN VON BETRIEBSDATEN WENIGSTENS EINER MASCHINE DER TABAKVERARBEITENDEN INDUSTRIE**
METHOD, DEVICE AND SYSTEM FOR COLLECTING, VISUALISING AND/OR MODIFYING OPERATING DATA OF AT LEAST ONE MACHINE PERTAINING TO THE TOBACCO PROCESSING INDUSTRY
PROCEDE, DISPOSITIF ET SYSTEME POUR LA SAISIE, LA VISUALISATION OU LA MODIFICATION DE DONNEES D'EXPLOITATION D'AU MOINS UNE MACHINE DE L'INDUSTRIE DU TABAC

(30) Priorität: 15.09.2000 DE 10046133
(43) Veröffentlichungstag der Anmeldung: 23.07.2003
(73) Patentinhaber: Hauni Maschinenbau AG, 21033 Hamburg (DE)
(72) Erfinder: RATHJEN, Andreas, 20259 Hamburg (DE); RICHTER, Dirk, 21035 Hamburg (DE); MARSAU, Uwe, 21521 Dassendorf (DE); BAATZ, Gunar, 22851 Norderstedt (DE); DANCAU, Marian-Georg, 25492 Heist (DE); FRAUEN, Helge, 21502 Geesthacht (DE); STRAUBE, Michael, 21035 Hamburg (DE); JUNGE, Christian, 21029 Hamburg (DE); ECKERT, Karsten, 22083 Hamburg (DE); GROTHAUS, Frank, 22763 Hamburg (DE); HEIKENS, Ralf, 21465 Wentorf (DE); WEDEKIND, Dierk, 21493 Grosschretstaken (DE)
(74) Vertreter: Seemann, Ralph
(86) Internationale Anmeldenummer: PCT/EP2001/010545
(87) Internationale Veröffentlichungsnummer: WO 2002/023290

(56) Entgegenhaltungen:
- EP-A- 0 813 159
- EP-A- 0 822 473
- EP-A- 0 825 506
- WO-A-00/31597
- WO-A-00/39645
- WO-A-97/26587

## Beschreibung

Die Erfindung betrifft ein Verfahren zum Erfassen, Visualisieren und/oder zum Verändern von Betriebsdaten wenigstens einer Maschine der Tabak verarbeitenden Industrie, wobei die Betriebsdaten von wenigstens einem Computer abgerufen werden, wobei wenigstens ein Teil der abgerufenen Betriebsdaten einem Web-Server zur Verfügung gestellt werden und über das Internet und/oder wenigstens ein Intranet von wenigstens einem weiteren mit dem Internet und/oder dem Intranet verbindbaren Computer und/oder Web-Client abrufbar sind.

Die Erfindung betrifft ferner eine Einrichtung zum Erfassen, Visualisieren und/oder zum Verändern von Betriebsdaten wenigstens einer Maschine der Tabak verarbeitenden Industrie, wobei ein Bussystem vorgesehen ist, mittels dessen Betriebsdaten zwischen wenigstens einem Steuersystem und wenigstens einem Computer übertragbar sind, wobei wenigstens eine Datenleitung vorgesehen ist, mittels deren wenigstens ein Teil der Betriebsdaten über das Internet und/oder das Intranet übertragbar ist, so dass dieser Teil über das Internet und/oder das Intranet erfassbar, visualisierbar und/oder veränderbar ist.

Maschinen und Anlagen in der Tabakindustrie sind generell mit Steuer- und Visualisierungssystemen ausgerüstet. Vorhandene Datenanschlüsse, wie insbesondere Ethernet-Datenanschlüsse, ermöglichen die Kommunikation mit Hostrechnern in den Fabriken der Unternehmen, die Tabak verarbeiten. Diese Unternehmen werden im Folgenden als Kunden bezeichnet. Über diese Kommunikation ist die Möglichkeit gegeben, beispielsweise die Produktionskapazitäten der einzelnen Maschinen und Anlagen in ein System oder eine Einrichtung zur Fabriksteuerung einzubeziehen. Beim Betrieb der Maschinen bzw. Anlagen der Tabakindustrie, wie beispielsweise Anlagen zur Tabakaufbereitung, Produktionsmaschinen für die Produktion von Zigaretten oder Verpackungsmaschinen für die Verpackung von Zigaretten, ist eine regelmäßige Wartung durch das Bedienpersonal nötig. Ggf. können Fehler im Betriebsablauf auftreten, die beseitigt werden müssen.

Die für die Beseitigung entsprechender Betriebsfehler geeignetsten Personen sind häufig bei den Herstellern der entsprechenden Maschinen bzw. Anlagen der Tabakindustrie zu finden. Entsprechendes gilt für die entsprechende Wartung derartiger Maschinen oder Anlagen. Diese Personen sind allerdings häufig nicht vor Ort beim Kunden, sondern müssen regelmäßig zu den Maschinen bzw. Anlagen anreisen.

Aus DE 198 31 867 A1 ist ein Verfahren und ein System zum Erfassen von Betriebsdaten von Maschinen bekannt, wobei die Betriebsdaten maschinenseitig gesammelt werden. Diese Betriebsdaten werden von einem DDE-Server abgerufen und von dem DDE-Server einer Applikation zur Verfügung gestellt.

In EP-A-0 825 506 werden ein Verfahren und eine Vorrichtung zur ferngesteuerten Prozesssteuerung offenbart, bei der ein Server und ein Client vorgesehen sind, die miteinander über ein Netzwerk verbunden sind. Der Server ist mit einer Prozesssteuerungsvorrichtung verbunden und umfasst einen Informationsserver zum Übertragen von Informationen über das Netzwerk und einen Befehlsprozessor zum Übertragen von Informationen zwischen dem Netzwerk und der Prozesssteuerungsvorrichtung. Der Client umfasst einen Webbrowser, der vom Server ein Applet abruft. Der Webbrowser definiert eine virtuelle Maschinenumgebung, in der das empfangene Applet ausgeführt wird, das den Client als Prozesssteuerelement konfiguriert t, das über das Netzwerk Verbindungen mit dem Befehlsprozessor einrichtet. Der als Prozesssteuerelement konfigurierte Client überwacht oder steuert dann die Prozesssteuervorrichtung über die Netzwerk-Verbindungen.

Die WO 00 31597 A offenbart ein Automatisierungssystem mit einem Rechnersystem, das in wenigstens eine Feldebene mit Feldbuskomponenten und Automatisierungsgeräten, in eine Steuerungsebene mit zumindest einem Serverrechner und in eine Clientebene mit einem oder mehreren Clientrechnern gegliedert ist. Es wird mit Automatisierungsklassen gearbeitet, deren Entwicklung in einem einheitlichen Kontext für einzelne, verschiedenartige Automatisierungsanteile der automatisierungstechnischen Aufgabe stattfindet.

Die EP-A-0 813 159 betrifft ein Verfahren und ein System für das nach Prioritäten sortierte Herunterladen von eingebetteten Internet-Objekten. Um besonders wichtige in Internet-Seiten eingebettete Dateien zunächst und vor den weniger wichtigen eingebetteten Dateien herunter zu laden, wird vorgeschlagen, dass die HTML-Tags im HTML-Dokument für jedes eingebettete Objekt eine Prioritätsangabe enthalten. Der Browser, mit dem das HTML-Dokument und die eingebetteten Objekte herunter geladen werden, sortiert dann die Reihenfolge des Herunterladens anhand der im HTML-Dokument für die eingebetteten Objekte.

Es ist eine Aufgabe der vorliegenden Erfindung, eine zeitextensive Möglichkeit der Wartung und der Veränderung von Betriebsdaten auch einer laufenden Maschine, insbesondere einer Anlage oder Maschine der Tabak verarbeitenden Industrie, zur Verfügung zu stellen, die auch bei langsamen Datenverbindungen eine optimale Übertragung der Betriebsdaten erlaubt. Es ist ferner eine Aufgabe der vorliegenden Erfindung, eine Möglichkeit zu eröffnen, Betriebsdaten von Maschinen der Tabak verarbeitenden Industrie darzustellen.

Gelöst wird diese Aufgabe durch ein Verfahren zum Erfassen, Visualisieren und/oder zum Verändern von Betriebsdaten wenigstens einer Maschine der Tabak verarbeitenden Industrie, wobei die Betriebsdaten von wenigstens einem Computer abgerufen werden, wobei wenigstens ein Teil der abgerufenen Betriebsdaten einem Web-Server zur Verfügung gestellt werden und über das Internet und/oder wenigstens ein Intranet von wenigstens einem weiteren mit dem Internet und/oder dem Intranet verbindbaren Computer und/oder Web-Client abrufbar sind, das dadurch weitergebildet ist, dass die Steuerung und/oder Visualisierung in Echtzeit geschieht, wobei die Menge der Daten entsprechend der Datenrate des Übertragungsweges so eingestellt wird dass die für eine Betriebsstörung relevanten Betriebsdaten und/oder von einer Bedienperson ausgewählten Betriebsdaten beim Abruf, bei der Visualisierung und/oder für die Steuerung Priorität haben.

Im Rahmen dieser Erfindung umfasst der Begriff Internet auch den Begriff Intranet. Es kommt bei diesem Begriff insbesondere darauf an, dass zur Kommunikation eine offene Kommunikationssprache bzw. Protokoll Verwendung findet, wie bspw. Netbios, IPX/SPX (z.B.: IEEE 802.2) oder TCP/IP. Die Betriebsdaten werden von einem Steuerrechner abgerufen und einem Web-Server übermittelt und können durch einen per Web-Technologie anschließbaren Computer, insbesondere Web-Client, abgerufen werden. Auf dem Web-Client und Web-Server kann eine Seitenbeschreibungssprache, wie HTML oder XML, Verwendung finden.

Der Web-Client kann dabei ein Programm sein, das auf einem Computer läuft, der an das Internet oder ein Intranet angeschlossen ist, oder ein Gerät, das als Web-Client verwendet werden kann, z.B. ein WAP-Handy oder ein UMTS-Handy. Der Web-Client kann aber auch ein Programm sein, das auf dem Steuerrechner der Maschine läuft und mit dem Web-Server per Web-Technologie kommuniziert. Ebenso kann der Web-Server ein Programm sein, das auf einem Computer läuft, der mit dem Steuerrechner der Maschine verbunden ist. Der Web-Server kann auch ein Programm sein, das direkt auf dem Steuerrechner der Maschine läuft.

In diesem Fall wird nur ein Computer benötigt, der die drei Funktionen Steuerrechner, Web-Server und Web-Client ausführt. Der Web-Client erfüllt in diesem Fall die Vorgabe, Betriebsdaten zu erfassen, zu visualisieren und/oder zu verändern. Die Kommunikation zwischen dem Web-Server und dem Web-Client und zwischen dem Web- Server und dem Steuerrechner bzw. Steuerprogramm findet dann in Web-Technologie, bspw. TCP/lP, statt. Auch die Kommunikation zwischen dem Web-Client und dem Steuerrechner findet dann mit einer derartigen Technologie statt.

Durch das erfindungsgemäße Verfahren ist es möglich, insbesondere die relevanten Betriebsdaten zu erfassen und zu visualisieren, so dass die nicht in den Betriebsräumen des Kunden anwesenden Bedienpersonen die wesentlichen Betriebsdaten auf einfache Weise überwachen können und ggf. über eine entsprechende Kommunikationsmöglichkeit den vor Ort anwesenden Personen Weisungen geben können. Die Person, die nicht vor Ort ist und den jeweiligen Fachmann für die entsprechende Maschine oder Anlage darstellt, kann eine Person sein, die dem Kunden zugeordnet ist oder aber eine Person, die dem Hersteller der entsprechenden Maschine oder Anlage zugeordnet ist.

Die Steuerung und/oder Visualisierung geschieht in Echtzeit. Echtzeit bedeutet im Rahmen dieser Erfindung insbesondere, dass die Daten vom Empfänger in der Rate verarbeitet bzw. dargestellt werden, in der sie übertragen werden, d.h. es tritt kein Datenverlust auf. Dies kann erreicht werden, indem die Datenrate des Übertragungswegs ermittelt und die Datenmenge entsprechend eingestellt wird. Dabei wird den Daten Priorität bei der Auswahl gegeben, die vom Web- Client explizit angefordert werden oder die eingetretene oder sich anbahnende Störungen betreffen. Durch die Anpassung der Datentiefe an die erreichbare Datenübertragungsrate kann ein Web-Client die volle Funktionalität eines herkömmlichen Visualisierungsrechners bieten, falls eine ausreichende Übertragungsbreite bereitgestellt wird (z.B. Client auf Steuerrechner, Breitband-Internet oder Wireless Ethernet).

Durch dieses Merkmal des erfindungsgemäßen Verfahrens ist es möglich, zeitnah in den Betrieb der entsprechenden Maschinen einzugreifen. Hierzu werden vorzugsweise Kommunikationswege verwendet und insbesondere Datenbanken verwendet, die sehr schnell sind.

Da die für eine Betriebsstörung relevanten Betriebsdaten und/oder von einer Bedienperson ausgewählten Betriebsdaten beim Abruf, bei der Visualisierung und/oder für die Steuerung Priorität haben, ist es möglich, auch mit einer etwas langsameren Datenverbindung eine Steuerung und/oder Visualisierung in Echtzeit zu gewährleisten.

Insbesondere vorzugsweise kann eine Identität zwischen dem wenigstens einen Computer, der die Betriebsdaten abruft, und dem, auf dem der Web-Server installiert ist, bestehen. Unter einem Web-Server wird im Rahmen dieser Erfindung insbesondere ein Computer oder ein Teil eines Computers verstanden, der wenigstens einen Bereich vorgesehen hat, auf den über das Internet zugegriffen werden kann, so dass über das Internet Daten von und/oder zu dem Web-Server sendbar sind.

Eine besonders bevorzugte Ausgestaltung der vorliegenden Erfindung ist dann gegeben, wenn außerdem die Maschine durch Veränderung der auf den Web-Server gestellten Betriebsdaten gesteuert wird. Durch diese Maßnahme kann die Maschine von außerhalb und insbesondere über das Internet gesteuert werden. Hierzu stellt der Web-Server dem Steuerrechner veränderte Betriebsdaten zur Verfügung, die von dem Web-Client an den Web-Server übertragen werden. Dadurch kann die Funktion der Maschine gesteuert werden. Wenn der Web-Client über das Internet oder ein Intranet mit dem Web-Server kommuniziert, findet somit eine Art Fernsteuerung statt.

Im Rahmen dieser Erfindung bedeutet Maschine der Tabak verarbeitenden Industrie insbesondere Produktionsmaschine zur Produktion von Zigaretten, eine Anlage zur Tabakaufbereitung, eine Verpackungsmaschine zur Verpackung von Zigaretten, mehrerer dieser Maschinen oder Anlagen oder ein System von derartigen Maschinen oder Anlagen, die miteinander gekoppelt sind. Im Rahmen dieser Erfindung bedeutet Betriebsdaten insbesondere Produktions- und Prozessdaten.

Vorzugsweise findet eine Visualisierung wenigstens eines Teils der abgerufenen Betriebsdaten auf dem wenigstens einem weiteren Computer bzw. auf wenigstens einem Web-Client statt. Die jeweils entsprechend visualisierten Betriebsdaten stellen dabei insbesondere die für den Betrieb der Maschinen wesentlichsten Daten vorzugsweise dar.

Vorzugsweise läuft wenigstens ein Teil des für die Steuerung der Maschine zuständigen Programms auf dem Web-Server und es werden Steuerbefehle an die Maschine und/oder an das Steuersystem gesendet. Durch diese vorzugsweise Ausgestaltung des erfindungsgemäßen Verfahrens ist eine dezentrale Überwachung und Steuerung der Maschine bzw. von entsprechenden Maschinen möglich. Ferner ist eine Aktualisierung entsprechender Programme bzw. Steuerprogramme sehr schnell und kostenextensiv möglich, wenn insbesondere vorzugsweise mehrere Maschinen durch ein Programm auf dem Web-Server gesteuert werden. In diesem Fall ist vorzugsweise der Web-Server von dem Kunden bzw. der Maschine des Kunden über das Internet zu erreichen, so dass insbesondere vorzugsweise Steuerbefehle über das Internet transmittiert werden.

Wenn vorzugsweise wenigstens ein Teil des für die Steuerung der Maschine zuständigen Programms auf dem wenigstens einen weiteren Computer läuft und die Steuerbefehle über das Internet an die Maschine und/oder das Steuersystem gesendet werden, ist es möglich, eine zentrale Steuerung mehrerer Maschinen zu realisieren, was bedienungs- und wartungsfreundlich ist und damit kostengünstig ist.

Vorzugsweise ist der Web-Server auf einem Computer angeordnet, der von der Maschine umfasst ist und mittels dessen Betriebsdaten von einem Steuersystem kommuniziert werden. Wenn ferner der Web-Server Bestandteil des Steuersystems ist, ist eine besonders schnelle Verfahrensführung möglich. Wenn außerdem der Web-Server direkt mit Aktoren und Sensoren der Maschine kommuniziert, kann ein sehr schneller und direkter Zugriff auf die Betriebsdaten geschehen.

Die Aufgabe wird ferner erfindungsgemäß durch eine Einrichtung zum Erfassen, Visualisieren und/oder zum Verändern von Betriebsdaten wenigstens einer Maschine der Tabak verarbeitenden Industrie gelöst, wobei ein Bussystem vorgesehen ist, mittels dessen Betriebsdaten zwischen wenigstens einem Steuersystem und wenigstens einem Computer übertragbar sind, wobei wenigstens eine Datenleitung vorgesehen ist, mittels deren wenigstens ein Teil der Betriebsdaten über das Internet und/oder das Intranet übertragbar ist, so dass dieser Teil über das Internet und/oder das Intranet erfassbar, visualisierbar und/oder veränderbar ist, die dadurch weitergebildet ist, dass Mittel vorgesehen sind, so dass wenigstens ein Teil des Teils der über das Internet und/oder das Intranet übertragbaren Betriebsdaten in Echtzeit übertragbar ist, wobei die Menge der Daten entsprechend der Datenrate des Übertragungsweges so einstellbar ist dass die für eine Betriebsstörung relevanten Betriebsdaten und/oder von einer Bedienperson ausgewählten Betriebsdaten beim Abruf, bei der Vi-sualisierung und/oder für die Steuerung prioritisiert sind.

Ferner vorzugsweise ist wenigstens ein Teil des Steuersystems physikalisch durch das Internet von der wenigstens einen Maschine getrennt angeordnet. Ferner vorzugsweise hat die Veränderung der Betriebsdaten über ein Intranet Vorrang vor der Veränderung der Betriebsdaten über das Internet. Wenn bspw. Daten über das Intranet verändert werden, wird davon ausgegangen, dass die Personen, die die Betriebsdaten ändern, in der Nähe der Maschinen sind. In diesem Fall ist dieser Bedienperson eine höhere Priorität als einer Bedienperson zuzuordnen, die entfernt über das Internet auf die Maschine zugreifen will. Hierzu reicht es aus, ein Sperrbit für die Veränderung von Betriebsdaten vom Internet aus zu setzen. Mittels Sperrbits wird der Zugriff vom Internet aus verweigert, wenn eine Bedienperson über das Intranet zugreift. Es ist auch möglich über verschiedene Kennwörter Prioritäten zuzuordnen.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der im Text nicht näher beschriebenen erfindungsgemäßen Einzelheiten ausdrücklich verwiesen wird. Es zeigen:
- Fig. 1: eine schematische Blockdiagrammdarstellung der erfindungsgemäßen Einrichtung,
- Fig. 2: ein Beispiel einer Visualisierung von Betriebsdaten,
- Fig. 3: ein weiteres Beispiel einer Visualisierung von Betriebsdaten,
- Fig. 4: ein drittes Beispiel einer Visualisierung von Betriebsdaten, und
- Fig. 5: eine weitere schematische Blockdiagrammdarstellung einer zweiten erfindungsgemäßen Einrichtung,
- Fig. 6: eine weitere schematische Blockdiagrammdarstellung eines einer dritten erfindungsgemäßen Einrichtung, und
- Fig. 7: eine schematische Bockdiagrammdarstellung einer weiteren erfindungsgemäßen Einrichtung.

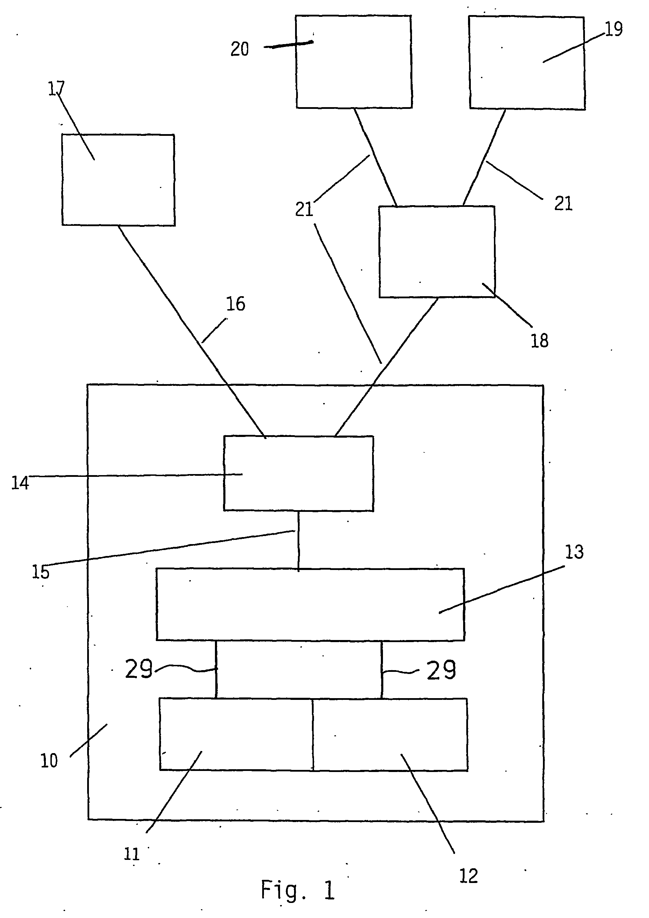

Fig. 1 zeigt in einer schematischen Blockdarstellung ein Ausführungsbeispiel der erfindungsgemäßen Einrichtung zum Erfassen, Visualisieren und/oder zum Verändern von Betriebsdaten einer Tabakaufbereitungsanlage 10. Die Tabakaufbereitungsanlage 10 umfasst Sensoren 11 und Aktoren 12, die in Verbindung mit einem Steuersystem 13 sind. Die Messdaten der Sensoren 11 werden dem Steuersystem 13 zur Verfügung gestellt, wohingegen Steuersignale vom Steuersystem 13 den Aktoren 12 zugeführt werden. Das Steuersystem 13 steht mit einem Computer 14 über einen Profibus 15 in Verbindung. Anstelle des Profibus 15 kann beispielsweise auch ein anderer bekannter Bus wie ein ISA-Bus oder ein MPI-Bus Verwendung finden. Der Profibus hat eine Übertragungsrate von 12 MBaud.

Der Computer 14 kann beispielsweise ein Computerprogramm umfassen, das die Visualisierung der Betriebsdaten vor Ort ermöglicht. Ferner kann der Computer 14 eine Software umfassen, die eine Verbindung zu einem Hostrechner 17 in der Fabrik des Kunden ermöglicht. Hierbei kann eine Intranet-Verbindung 16 Verwendung finden, die beispielsweise über das Ethernet stattfindet. Ferner kann der Computer 14 ein Programm umfassen und weitere Elemente, mittels denen eine Internetverbindung 21 möglich ist. Mittels dieser Internetverbindung 21 kann eine Verbindung von dem Computer 14 zu einem Web-Server 18 möglich sein. Die Internetverbindung ist physikalisch durch wenigstens eine Datenleitung ausgestaltet.

Als vorzugsweise Ausgestaltung dieser Erfindung könnte der Computer 14 selbst der Web-Server 18 sein oder ein Teil des Computers 14 der Web-Server 18 sein. Gem. der Fig. 1 können Daten und insbesondere Betriebsdaten zwischen einem Computer 19 beim Hersteller der Tabakaufbereitungsanlage 10 und dem Web-Server 18 übermittelt werden und entsprechend auch zwischen dem Web-Server 18 und einem Computer 20 beim Kunden. Entsprechend können Daten und insbesondere Betriebsdaten zwischen dem Web-Server 18 und dem Computer 14 und damit auch dem Steuersystem 13 übermittelt werden. Es können außerdem Daten und insbesondere Betriebsdaten über das Intranet zwischen dem Hostrechner 17 und dem Computer 14 und damit auch dem Steuersystem 13 übermittelt werden.

Durch die erfindungsgemäße Einrichtung ist es möglich, Produktionsdaten, wie insbesondere die Menge des aufzubereitenden Tabaks und die Menge des an eine Produktionsmaschine von Zigaretten zu sendenden Tabaks, einzustellen. Ferner ist es möglich, entsprechend Drehzahlen und Schussmengen der entsprechenden Anlage oder einer in Fig. 1 nicht dargestellten Produktionsmaschine zur Produktion von Zigaretten zu übertragen bzw. einzustellen. Entsprechend können auch Betriebsdaten einer Verpackungsmaschine von Zigaretten visualisiert, erfasst und/oder geändert werden.

Zur Visualisierung der Betriebsdaten kann beispielsweise vorzugsweise die Software TestPoint der Fa. Keithley Verwendung finden oder das Programm Win CC WebNavigator Verwendung finden.

Hierdurch ist eine benutzerfreundliche Prozessvisualisierung und -bedienung über das Internet möglich. Unter Visualisierung wird im Rahmen dieser Erfindung nicht nur die Darstellung von Betriebsdaten auf einem Monitor verstanden, sondern auch die Möglichkeit, Daten bspw. über eine Tastatur oder einen berührungsempfindlichen Monitor einzugeben.

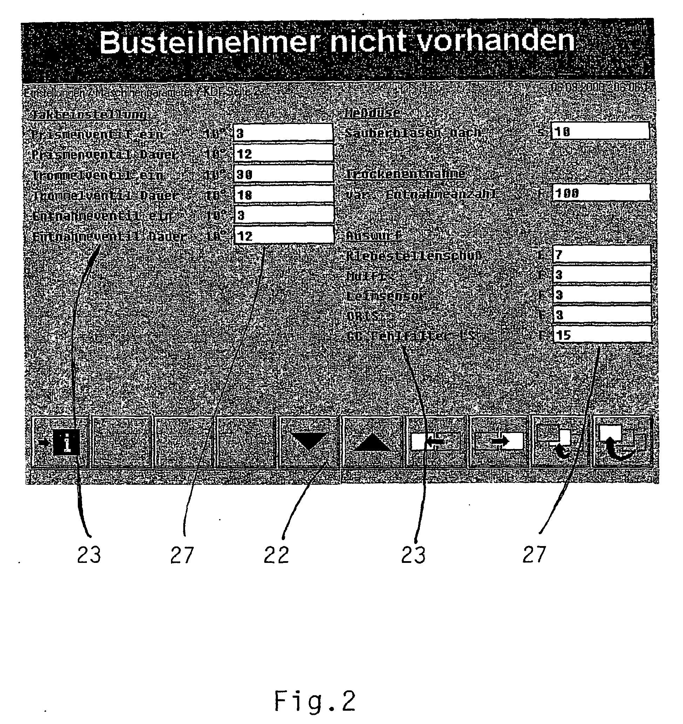

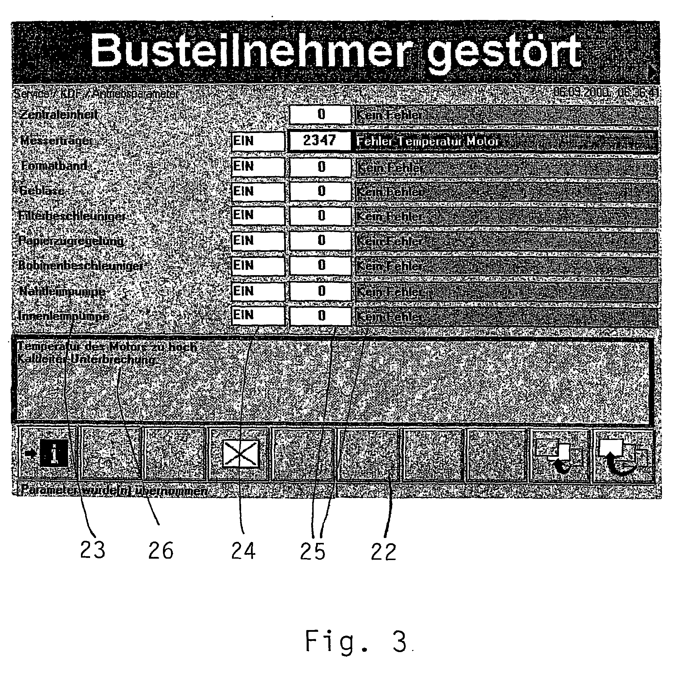

Als Beispiele für entsprechende Visualisierungen sollen die Fig. 2, 3 und 4 dienen. Diese stellen jeweils eine beispielhafte Anzeige auf einem Monitor dar. Es ist eine Funktionsleiste 22 dargestellt, mittels der man sich beispielsweise durch die Seiten der Visualisierung durchblättern kann. In dem Einheitsfeld 23 sind Maschineneinheiten, wie beispielsweise ein Prismenventil, ein Trommelventil oder ein Entnahmeventil angezeigt. Ferner ist beispielsweise, wie in Fig. 3 dargestellt ist, eine Zentraleinheit, ein Messerträger, das Formatband, ein Gebläse, ein Filterbeschleuniger, eine Papierzugregelung, ein Bobinenbeschleuniger, eine Nahtleimpumpe und eine Innenleimpumpe in dem Einheitsfeld 23 dargestellt. In dem Statusfeld 24 ist angezeigt, ob die jeweilige Einheit ein- oder ausgeschaltet ist. Ferner ist ein Fehlerfeld 25 in Fig. 3 dargestellt, bei der sowohl eine Zahl als auch eine schriftliche Beschreibung vorgesehen ist. In dem Fehlerfeld 25, das dem Messerträger zugeordnet ist, ist in Fig. 3 die Zahl 2.347 dargestellt, was einem Fehler bezüglich der Temperatur des Motors entspricht. Der entsprechende Fehler ist in dem Beschreibungsfeld 26 näher spezifiziert. Demgemäß ist die Temperatur des Motors zu hoch bzw. es ist eine Kaltleiter-Unterbrechung vorhanden.

In Fig. 2 ist außerdem ein Parameterfeld 27 dargestellt, das entsprechende Parameter für die davor genannten Einheiten im Einheitsfeld 23 darstellt. In den entsprechenden Parameterfeldern 27 können die Parameter eingestellt und die eingestellten Parameter an die entsprechende Maschine gesendet werden. Bei entsprechenden Problemen ist es für den Konstrukteur oder einer anderen Bedienperson möglich über einen Internetzugang das Visualisierungssystem der Maschine aufzurufen und wichtige Informationen zur Fehlerdiagnose abzulesen und gegebenenfalls Betriebsdaten abzuändern.

Fig. 3 zeigt beispielsweise den Fehlerdiagnose-Report für das Antriebssystem einer Produktionsmaschine zur Produktion von Zigaretten.

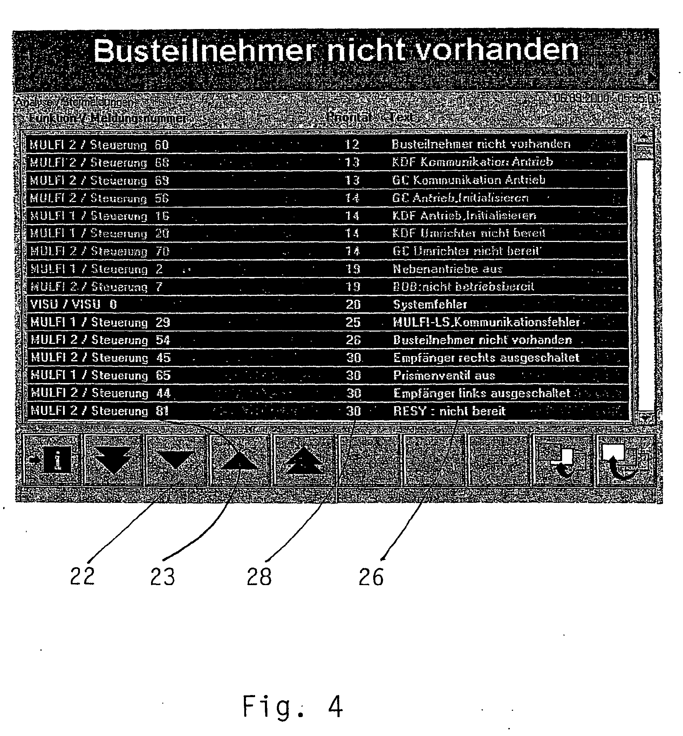

Fig. 4 zeigt beispielsweise aktuelle Fehlermeldungen in einem Beschreibungsfeld 26, wobei den jeweiligen Fehlern im Prioritätsfeld 28 Prioritäten zugeordnet sind.

Ferner ist es möglich, über das System online die Abarbeitung des Maschinenprogramms mitzuverfolgen. Hiermit ist insbesondere auch eine Fernwartung bzw. eine Fernbedienung der entsprechenden Maschine möglich. Bei der entsprechenden Maschine handelt es sich beispielsweise um eine Protos 90 E, eine KDF 3E/AF 3E (Filterherstellmaschine) bzw. eine Chronos (Packmaschine) der Anmelderin.

Ferner ist es möglich, jeder operativen Einheit eine Internetadresse zuzuordnen, die eine Website beinhaltet. Über diese Adresse ist mit ihren entsprechenden Verzweigungen bzw. Links oder unter- und übergeordneten Seiten möglich, Daten, Parameter und Betriebszustände über große Entfernungen abzufragen. Bei Bedarf können auch entsprechende Parameter für die unterschiedlichsten Betriebsarten der Maschinen und Anlagen eingestellt werden. Sicherheitsmechanismen organisieren hierbei die Berechtigung und den Zugriff auf sensible Maschinendaten. Die dargestellten und veränderbaren Betriebsdaten werden in Echtzeit aktualisiert bzw. in Echtzeit verändert. Hierzu werden vorzugsweise die wichtigsten Daten zur Übertragung über die Datenleitungen mit einer erhöhten Priorität versehen, da die entsprechenden Anlagen oder Maschinen zum Teil sehr zeitkritisch sind, was bei einer Herstellgeschwindigkeit, beispielsweise einer Zigarette, bei einer Zigarettenproduktionsmaschine von einer Zigarette in 6 ms klar sein sollte.

Vorzugsweise ist das in Fig. 1 dargestellte Steuersystem 13 wenigstens zum Teil aus der Maschine bzw. Tabakaufbereitungsanlage 10 ausgelagert, und zwar auf dem Hostrechner 17, dem Web-Server 18 und/oder einem der Computer 19 oder 20. Hierdurch ist es möglich, eine dort vorhandene möglicherweise höhere Computerleistung für die Steuerung der entsprechenden Maschinen zu nutzen.

Betriebsdaten können produktionserfassende Daten sein, wie z.B. die Ist- oder Messwerte von Geschwindigkeiten (z.B. Stranggeschwindigkeiten, Fördergeschwindigkeiten usw.), Temperaturen, Drücke, Drehzahlen, Stückzahlen, Qualitätsdaten usw., maschinenspezifische Daten in Gestalt von Sollwerten der oben genannten Größen und Parameter der Antriebssysteme, wie z.B. Nachstellzeiten, Lagereglerverstärkung, Synchronverhältnisse, Lageabweichungsdaten usw.

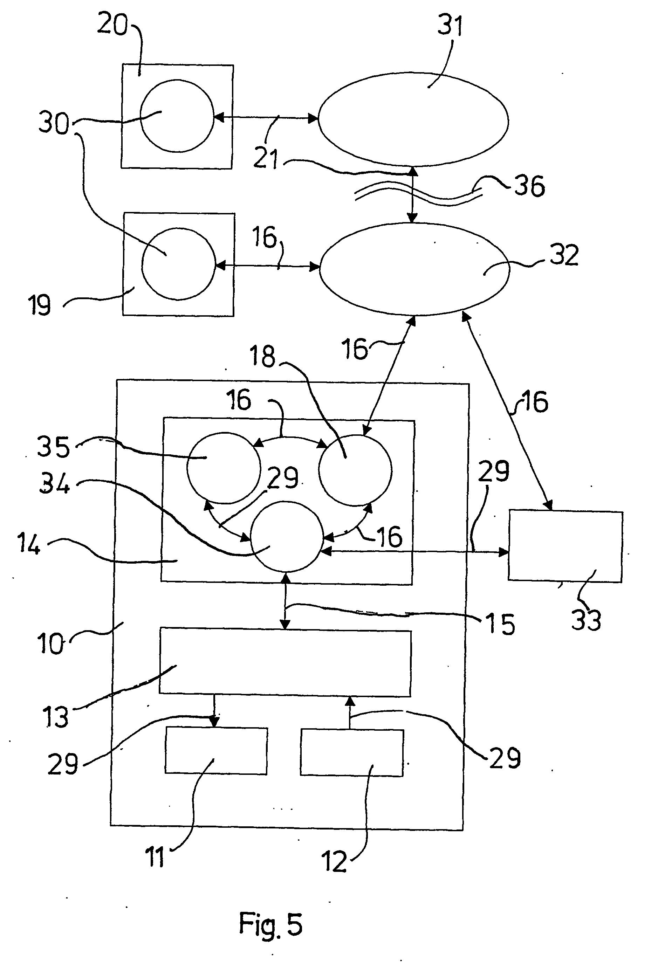

Fig. 5 zeigt eine weitere schematische Blockdiagrammdarstellung einer weiteren erfindungsgemäßen Einrichtung. In dieser Figur ist der Computer 14 bezüglich Softwareprodukten bzw. Softwareeinheiten näher spezifiziert. Es ist ein Web-Server 18 in Form von Software auf dem Computer 14 realisiert, der über Intranetverbindungen 16 mit einer Visualisierungs- und Eingabesoftware 35 verbunden ist und mit einer Kommunikationssoftware 34, mittels der eine Kommunikation mit dem Steuersystem 13 möglich ist. Die Kommunikationssoftware 34 ist über eine Verbindungsleitung 29 bzw. eine softwaremäßig realisierte Verbindung mit der Visualisierungs- und Eingabesoftware 35 verbunden. Diese Verbindung 29 kann auch in Form einer Intranetverbindung 16 realisiert sein, bei der insbesondere mittels der offenen Programmiersprache TCP/IP oder einem anderen Protokoll, das als Beispiel vorangehend benannt wurde, eine Kommunikation stattfinden kann. Ferner ist über eine Verbindungsleitung 29 die Kommunikationssoftware mit einem sonst üblichen Betriebsdatenerfassungssystem 33 in Fig. 5 verbunden. Diese sonst bei entsprechenden Zigarettenmaschinen bzw. entsprechenden Maschinen der Tabak verarbeitenden Industrie benutzten Betriebsdatenerfassungssysteme 33 können also flankierend noch Verwendung finden und dienen insbesondere einer sehr schnellen Kommunikation und einer sehr schnellen Steuerung und Erfassung der Betriebsdaten.

Sowohl das Betriebsdatenerfassungssystem 33 als auch der Web-Server 18 sind mit dem Intranet 32 verbunden, das in Fig. 5 nur schematisch dargestellt sein soll. Tatsächlich können auch als Intranet 32 die weiteren mit dem Intranet verbundenen Komponenten und Leitungen verstanden werden, wie insbesondere auch diejenigen, die in dem Computer 14 angeordnet sind. Das Intranet ermöglicht eine Verbindung zu einem Computer 19 beim Kunden, auf dem eine Software eines Web-Clients 30 realisiert ist, mittels der eine Visualisierung und Veränderung von Betriebsdaten möglich ist. Entsprechend ist das Intranet 32 über eine Internetverbindung 21 mit dem Internet 31 verbunden. Hierzu wird üblicherweise eine Entkopplung 36 vorgesehen, wie bspw. eine Firewall oder ein ausschließlicher Zugang über nur eine Einwahltelefonnummer, um zu verhindern, dass unberechtigte Personen in das Intranet 32 aus dem Internet 31 gelangen. Über das Internet 31 kann mittels Datenleitung 21 ein Computer beim Hersteller 20 verbunden sein, auf dem ein Web-Client 30 läuft, auf dem auch Daten visualisiert und verändert bzw. eingegeben werden können.

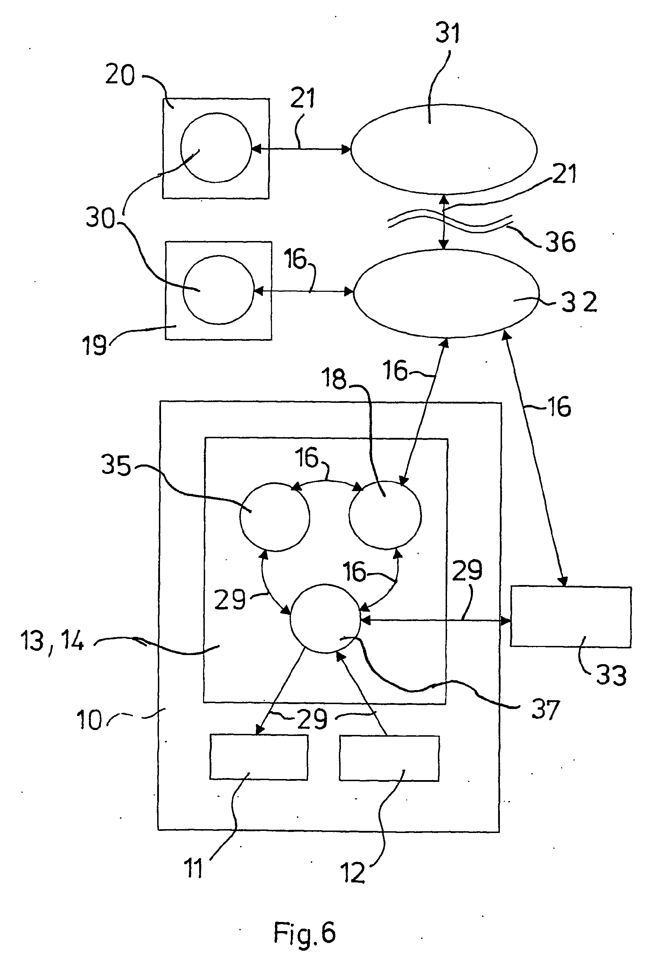

Fig. 6 zeigt ein weiteres Ausführungsbeispiel der erfindungsgemä-βen Einrichtung, bei der im Vergleich zu Fig. 5 der Computer 14 gleichzeitig ein Steuersystem 13 ist, so dass der Web-Server 18 als Untereinheit des Steuersystems 13 vorgesehen ist. Es ist in diesem Ausführungsbeispiel eine Steuersoftware 37 vorgesehen, mittels der die Daten von den Sensoren 11 empfangen und weitergeleitet werden können und mittels der Aktoren 12 gesteuert werden können. Sensoren 11 und Aktoren 12 sind mit entsprechenden Verbindungsleitungen 29 mit dem Computer 14 bzw. der Steuersoftware 37 verbindbar. In diesem Ausführungsbeispiel greift der Web-Server direkt auf die Steuersoftware zu, so dass eine sehr schnelle Verbindung und Steuerung möglich ist. Auch das Betriebsdatenerfassungssystem 33 ist mit der Steuersoftware 37 verbunden.

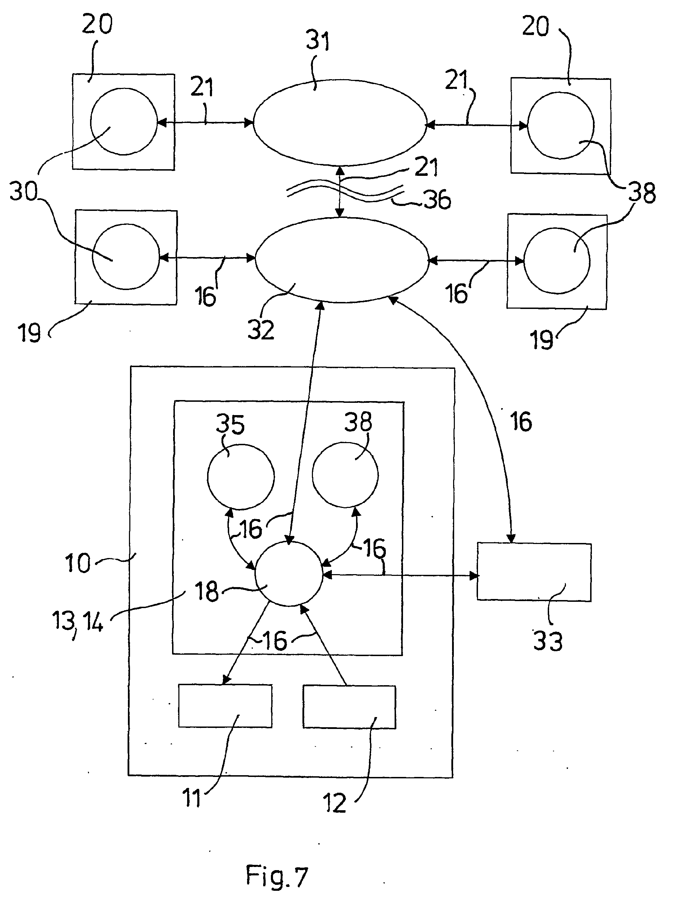

In Fig. 7 ist ein viertes Ausführungsbeispiel der erfindungsgemäßen Einrichtung dargestellt. In diesem Ausführungsbeispiel ist der Programmieraufwand sehr stark minimiert, da sämtliche Komponenten über eine Web-Technologie programmiert sind und die Softwaremodule, die auf dem Computer 14 bzw. dem Steuersystem 13 denen entsprechen können, die entfernt von der Maschine 10 über das Intranet mit der Maschine 10 verbindbar sind bzw. noch weiter entfernt über das Internet mit der Maschine verbindbar sind. In diesem Ausführungsbeispiel ist direkt der Web-Server 18 in dem Computer 14 bzw. dem Steuersystem 13 mit den Aktoren und Sensoren verbunden und ferner auch zusätzlich noch mit dem Betriebsdatenerfassungssystem 33. Von dem Web-Server 18 gehen Intranetverbindungen, also insbesondere Verbindungen in dem Intranetdatenformat, zu einer Visualisierungs- und Eingabesoftware 35 bzw. einem entsprechenden Modul und einem Steuerungs-Client 38. Die Visualisierungs- und Eingabesoftware 35 kann in diesem Ausführungsbeispiel auch als Web-Client 30 ausgeführt sein. Entsprechende Web-Clients 30 sind auch wie gehabt am Intranet bzw. am Internet angeschlossen, die dann eine entsprechende Visualisierungs- und Eingabesoftware 35 aufweisen können. Ferner kann der in dem Computer 14 bzw. dem Steuersystem 13 vorgesehene Steuerungs-Client 38 entsprechend auch entfernt von der Maschine 10 an das Intranet 32 angeschlossen werden und noch weiter entfernt von der Maschine 10 bzw., bspw. beim Hersteller, mit dem Internet 31 verbunden sein.

Das Ausführungsbeispiel gemäß Fig. 7 ermöglicht eine sehr einfache Programmierung der entsprechenden Programmmodule. Das Ausführungsbeispiel gemäß der Fig. 6 ist im Verhältnis zu den Ausführungsbeispielen der vorangehenden Figuren auch relativ einfach zu programmieren, da auch dort schon eine entsprechende Übereinstimmung von Softwaremodulen hergestellt werden kann.

### Bezugszeichenliste

- 10: Tabakaufbereitungsanlage
- 11: Sensoren
- 12: Aktoren
- 13: Steuersystem
- 14: Computer
- 15: Profibus
- 16: Intranetverbindung
- 17: Hostrechner
- 18: Web-Server
- 19: Computer beim Kunden
- 20: Computer beim Hersteller
- 21: Internetverbindung
- 22: Funktionsleiste
- 23: Einheitsfeld
- 24: Statusfeld
- 25: Fehlerfeld
- 26: Beschreibungsfeld
- 27: Parameterfeld
- 28: Prioritätsfeld
- 29: Verbindungsleitung
- 30: Web-Client
- 31: Internet
- 32: Intranet
- 33: Betriebsdatenerfassungssystem
- 34: Kommunikationssoftware
- 35: Visualisierungs- und Eingabesoftware
- 36: Entkopplung
- 37: Steuersoftware
- 38: Steuerungs-Client

## Patentansprüche

1. Verfahren zum Erfassen, Visualisieren und/oder zum Verändern von Betriebsdaten wenigstens einer Maschine (10) der Tabak verarbeitenden Industrie, wobei die Betriebsdaten von wenigstens einem Computer (14, 17 - 20) abgerufen werden, wobei wenigstens ein Teil der abgerufenen Betriebsdaten einem Web-Server (18) zur Verfügung gestellt werden und über das Internet (21) und/oder wenigstens ein Intranet (16, 32) von wenigstens einem weiteren mit dem Internet (21, 31) und/oder dem Intranet (16, 32) verbindbaren Computer (19, 20) und/oder Web-Client (30) abrufbar sind, **dadurch gekennzeichnet, dass** die Steuerung und/oder Visualisierung in Echtzeit geschieht, wobei Echtzeit insbesondere bedeutet, dass die Daten von Empfänger in der Rate verarbeitet bzw. dargestellt werden in der sie übertragen werden, wobei die Menge der Daten entsprechend der Datenrate des Übertragungsweges so eingestellt wird dass die für eine Betriebsstörung relevanten Betriebsdaten und/oder von einer Bedienperson ausgewählten Betriebsdaten beim Abruf, bei der Visualisierung und/oder für die Steuerung Priorität haben.

2. Verfahren nach Anspruch 1, **dadurch gekennzeichnet, dass** außerdem die Maschine (10) durch Veränderung der auf dem Web-Server (18) zur Verfügung gestellten Betriebsdaten gesteuert wird.

3. Verfahren nach Anspruch 1 und/oder 2, **dadurch gekennzeichnet, dass** eine Visualisierung wenigstens eines Teils der abgerufenen Betriebsdaten auf dem wenigstens einen weiteren Computer (18 - 20) stattfindet.

4. Verfahren nach einem oder mehreren der Ansprüche 1 bis 3, **dadurch gekennzeichnet, dass** wenigstens ein Teil des für die Steuerung der Maschine (10) zuständigen Programms auf dem Web-Server (18) läuft und Steuerbefehle an die Maschine (10) oder an das Steuersystem (13) gesendet werden.

5. Verfahren nach einem oder mehreren der Ansprüche 1 bis 4, **dadurch gekennzeichnet, dass** wenigstens ein Teil des für die Steuerung der Maschine (10) zuständigen Programms auf dem wenigstens einen weiteren Computer (18 - 20) und/oder einem Web-Client (30) läuft und die Steuerbefehle über das Internet (21, 31) und/oder das Intranet (16, 32) an die Maschine (10) und/oder das Steuersystem (13) gesendet werden.

6. Verfahren nach einem oder mehreren der Ansprüche 1 bis 5, **dadurch gekennzeichnet, dass** der Web-Server (18) auf einem Computer (14) angeordnet ist, der von der Maschine (10) umfasst ist, und mittels dessen Betriebsdaten von einem Steuersystem (13) kommuniziert werden.

7. Verfahren nach einem oder mehreren der Ansprüche 1 bis 6, **dadurch gekennzeichnet, dass** der Web-Server (18) Bestandteil des Steuersystems (13) ist.

8. Verfahren nach Anspruch 7, **dadurch gekennzeichnet, dass** der Web-Server (18) direkt mit Aktoren (12) und Sensoren (11) der Maschine (10) kommuniziert.

9. Einrichtung zum Erfassen, Visualisieren und/oder zum Verändern von Betriebsdaten wenigstens einer Maschine (10) der Tabak verarbeitenden Industrie, wobei ein Bussystem (15, 16) vorgesehen ist, mittels dessen Betriebsdaten zwischen wenigstens einem Steuersystem (13) und wenigstens einem Computer (14, 17) übertragbar sind, wobei wenigstens eine Datenleitung (21) vorgesehen ist, mittels deren wenigstens ein Teil der Betriebsdaten über das Internet (21, 31) und/oder das Intranet (16, 32) übertragbar ist, so dass dieser Teil über das Internet (21, 31) und/oder das Intranet (16,32) erfassbar, visualisierbar und/oder veränderbar ist, **dadurch gekennzeichnet, dass** Mittel vorgesehen sind, so dass wenigstens ein Teil des Teils der über das Internet und/oder das Intranet übertragbaren Betriebsdaten in Echtzeit übertragbar ist wobei Echtzeit insbesondere bedeutet, dass die Daten von Empfänger in der Rate verarbeitet bzw. dargestellt werden in der sie ubertragen werden, wobei die Menge der Daten entsprechend der Datenrate des Übertragungsweges so einstellbar ist dass die für eine Betriebsstörung relevanten Betriebsdaten und/oder von einer Bedienperson ausgewählten Betriebsdaten beim Abruf, bei der Visualisierung und/oder für die Steuerung prioritisiert sind.

10. Einrichtung nach Anspruch 9, **dadurch gekennzeichnet, dass** wenigstens ein Teil des Steuersystems (13) physikalisch durch das Internet und/oder das Intranet von der wenigstens einen Maschine (10) getrennt angeordnet ist.

11. Einrichtung nach Anspruch 9 oder 10, **dadurch gekennzeichnet, dass** die Veränderung der Betriebsdaten über ein Intranet (16) Vorrang vor der Veränderung der Betriebsdaten über das Internet hat.

12. Einrichtung nach einem der Ansprüche 9 bis 11, **dadurch gekennzeichnet, dass** der Web-Server (18) auf einem Computer (14) angeordnet ist, der von der Maschine (10) umfasst ist, und mittels dessen eine Kommunikation der Betriebsdaten zwischen dem Steuersystem (13) und dem Web-Server (18) wenigstens mittelbar ermöglicht ist.

13. Einrichtung nach einem oder mehreren der Ansprüche 9 bis 12, **dadurch gekennzeichnet, dass** der Web-Server (18) von dem Steuersystem (13) umfasst ist.

14. Einrichtung nach Anspruch 13, **dadurch gekennzeichnet, dass** der Web-Server (18) direkt mit Aktoren (12) und Sensoren (11) der Maschine (10) verbindbar ist.

## Claims

1. Method for acquiring, visualizing and/or altering operating data of at least one machine (10) of the tobacco processing industry, wherein the operating data are called up by at least one computer (14, 17 - 20), at least a portion of the called-up operating data is made available to a web server (18) and can be called up, via the Internet (21) and/or at least one intranet (16, 32), by at least one further computer (19, 20) and/or web client (30) that can be connected to the Internet (21, 31) and/or to the intranet (16, 32), **characterized in that** the control and/or visualization occurs in real time, real time meaning, in particular, that the data are processed or displayed by the receiver at the rate at which they are transmitted, the quantity of data being set according to the data rate of the transmission path such that the operating data relevant to an interruption of operation and/or operating data selected by an operator have priority in call-up, in visualization and/or for control.

2. Method according to claim 1, **characterized in that** the machine (10) is additionally controlled through alteration of the operating data made available on the web server (18).

3. Method according to claim 1 and/or 2, **characterized in that** visualization of at least a portion of the called-up operating data is effected on the at least one further computer (18 - 20).

4. Method according to one or more of claims 1 to 3, **characterized in that** at least a portion of the program responsible for controlling the machine (10) runs on the web server (18), and control commands are sent to the machine (10) or to the control system (13).

5. Method according to one or more of claims 1 to 4, **characterized in that** at least a portion of the program responsible for controlling the machine (10) runs on the at least one further computer (18 - 20) and/or a web client (30), and the control commands are sent to the machine (10) and/or to the control system (13) via the Internet (21, 31) and/or the intranet (16, 32).

6. Method according to one or more of claims 1 to 5, **characterized in that** the web server (18) is disposed on a computer (14) which is comprised by the machine (10) and by means of which operating data are communicated by a control system (13).

7. Method according to one or more of claims 1 to 6, **characterized in that** the web server (18) is a constituent part of the control system (13).

8. Method according to claim 7, **characterized in that** the web server (18) communicates directly with actuators (12) and sensors (11) of the machine (10).

9. Apparatus for acquiring, visualizing and/or altering operating data of at least one machine (10) of the tobacco processing industry, wherein there is provided a bus system (15, 16) by means of which operating data can be transmitted between at least one control system (13) and at least one computer (14, 17); there is provided at least one data line (21) by means of which at least a portion of the operating data can be transmitted via the Internet (21, 31) and/or the intranet (16, 32) such that this portion can be acquired, visualized and/or altered via the Internet (21, 31) and/or the intranet (16, 32), **characterized in that** means are provided such that at least a portion of the portion of the operating data that can be transmitted via the Internet and/or the intranet can be transmitted in real time, real time meaning, in particular, that the data are processed or displayed by the receiver at the rate at which they are transmitted, the quantity of data being settable according to the data rate of the transmission path such that the operating data relevant to an interruption of operation and/or operating data selected by an operator have priority in call-up, in visualization and/or for control.

10. Apparatus according to claim 9, **characterized in that** at least a portion of the control system (13) is so disposed that it is physically separated from the at least one machine (10) by the Internet and/or the intranet.

11. Apparatus according to either of claims 9 or 10, **characterized in that** the alteration of the operating data via an intranet (16) has priority over the alteration of the operating data via the Internet.

12. Apparatus according to any one of claims 9 to 11, **characterized in that** the web server (18) is disposed on a computer (14) which is comprised by the machine (10) and by means of which communication of the operating data is rendered possible, at least indirectly, between the control system (13) and the web server (18).

13. Apparatus according to one or more of claims 9 to 12, **characterized in that** the web server (18) is comprised by the control system (13).

14. Apparatus according to claim 13, **characterized in that** the web server (18) can be connected directly to actuators (12) and sensors (11) of the machine (10).

## Revendications

1. Procédé pour la saisie, la visualisation et/ou la modification de données d'exploitation d'au moins une machine (10) de l'industrie du tabac, où les données d'exploitation sont appelées par au moins un calculateur (14, 17 à 20), au moins une partie des données d'exploitation appelées est mise à la disposition d'un serveur web (18) et peut être appelée via internet (21) et/ou au moins un intranet (16, 32) par au moins un autre calculateur (19, 20) et/ou client web (30) apte à être connecté à internet (21, 31) et/ou à l'intranet (16, 32), **caractérisé en ce que** la commande et/ou la visualisation a lieu en temps réel, le temps réel signifiant en particulier que les données sont traitées ou affichées par le destinataire à la vitesse à laquelle elles sont transmises, la quantité de données étant réglée en fonction de la vitesse des données de la voie de transmission de sorte que les données d'exploitation relatives à une panne d'exploitation et/ou les données d'exploitation sélectionnées par un opérateur aient priorité lors de l'appel, lors de la visualisation et/ou pour la commande.

2. Procédé selon la revendication 1, **caractérisé en ce que**, en outre, la machine (10) est commandée par modification des données d'exploitation mises à disposition sur le serveur web (18).

3. Procédé selon la revendication 1 et/ou 2, **caractérisée en ce qu'**une visualisation d'au moins une partie des données d'exploitation appelées a lieu sur le au moins un autre calculateur (18-20).

4. Procédé selon une ou plusieurs des revendications 1 à 3, **caractérisé en ce qu'**au moins une partie du programme pertinent pour la commande de la machine (10) se déroule sur le serveur web (18) et que des ordres de commande sont transmis à la machine (10) ou au système de commande (13).

5. Procédé selon une ou plusieurs des revendications 1 à 4, **caractérisé en ce qu'**au moins une partie du programme pertinent pour la commande de la machine (10) se déroule sur le au moins un autre calculateur (18 à 20) et/ou un client web (30) et que les ordres de commande sont envoyés, via internet (21, 31) et/ou l'intranet (16, 32), à la machine (10) et/ou au système de commande (13).

6. Procédé selon une ou plusieurs des revendications 1 à 5, **caractérisé en ce que** le serveur web (18) est disposé sur un calculateur (14) qui est contenu dans la machine (10), et au moyen duquel des données d'exploitation sont communiquées par un système de commande (13).

7. Procédé selon une ou plusieurs des revendications 1 à 6, **caractérisé en ce que** le serveur web (18) est partie intégrante du système de commande (13).

8. Procédé selon la revendication 7, **caractérisé en ce que** le serveur web (18) communique directement avec des actionneurs (12) et des capteurs (11) de la machine (10).

9. Dispositif pour la saisie, la visualisation et/ou la modification de données d'exploitation d'au moins une machine (10) de l'industrie du tabac, où un système de bus (15, 16) est prévu, au moyen duquel des données d'exploitation sont transmissibles entre au moins un système de commande (13) et au moins un calculateur (14, 17), au moins une ligne de données (21) est prévue, au moyen de laquelle au moins une partie des données d'exploitation est transmissible via internet (21 , 31) et/ou l'intranet (16, 32) de telle façon que cette partie soit apte à être saisie, visualisée et/ou modifiée via internet (21 , 31) et/ou l'intranet (16, 32), **caractérisé en ce que** des moyens sont prévus de telle façon qu'au moins une partie de la partie des données d'exploitation transmissibles via internet et/ou intranet soit transmissible en temps réel, le temps réel signifiant en particulier que les données sont traitées ou affichées par le destinataire à la vitesse à laquelle elles sont transmises, la quantité de données étant réglable en fonction de la vitesse des données de la voie de transmission de sorte que les données d'exploitation relatives à une panne d'exploitation et/ou les données d'exploitation sélectionnées par un opérateur aient priorité lors de l'appel, lors de la visualisation et/ou pour la commande.

10. Dispositif selon la revendication 9, **caractérisé en ce qu'**au moins une partie du système de commande (13) est disposée physiquement en étant séparée de la au moins une machine (10) par internet et/ou intranet.

11. Dispositif selon la revendication 9 ou 10, **caractérisé en ce que** la modification des données d'exploitation via un intranet (16) a priorité sur la modification des données d'exploitation via internet.

12. Dispositif selon une des revendications 9 à 11, **caractérisé en ce que** le serveur web (18) est disposé sur un calculateur (14) contenu dans la machine (10) et au moyen duquel est rendue possible, au moins indirectement, une communication des données d'exploitation entre le système de commande (13) et le serveur web (18).

13. Dispositif selon une ou plusieurs des revendications 9 à 12, **caractérisé en ce que** le serveur web (18) est contenu dans le système de commande (13).

14. Dispositif selon la revendication 13, **caractérisé en ce que** le serveur web (18) peut être directement relié à des actionneurs (12) et capteurs (11) de la machine (10).
